# FASCICULE DE BREVET EUROPEEN

(11) **EP 3 681 292 B1**
(45) Date de publication et mention de la délivrance du brevet: **26.06.2024**
(21) Numéro de dépôt: 18780178.2
(22) Date de dépôt: 10.09.2018
(51) Int. Cl.: A22C 7/00

(54) **OUTILLAGE COMPORTANT UNE EMPREINTE DE MOULAGE EN MATERIAU POREUX, MACHINE DE FORMATION DE GALETTES ET MACHINE DE LAVAGE D'EMPREINTES COMPORTANT UN TEL OUTILLAGE**
WERKZEUG MIT EINEM FORMHOHLRAUM AUS PORÖSEM MATERIAL, MASCHINE ZUR HERSTELLUNG EINER PASTETE UND FORMHOHLRAUMWASCHMASCHINE MIT EINEM SOLCHEN WERKZEUG
TOOLING COMPRISING A MOULD CAVITY MADE OF POROUS MATERIAL, A PATTY FORMING MACHINE AND MOULD CAVITY WASHING MACHINE COMPRISING SUCH TOOLING

(30) Priorité: 11.09.2017 FR 1758358
(43) Date de publication de la demande: 22.07.2020
(73) Titulaire: Marel France, 56150 Baud (FR)
(72) Inventeur: LE PAIH, Jacques, 56150 BAUD (FR); MEULENDIJKS, Johannes Martinus, 5831 AV BOXMEER (NL); LE PABIC, Fabrice, 56150 BAUD (FR); PIERRE, Yohann, 56150 BAUD (FR)
(74) Mandataire: EP&C
(86) Numéro de dépôt international: PCT/FR2018/052210
(87) Numéro de publication internationale: WO 2019/048805

(56) Documents cités:
- EP-A1- 2 468 104
- WO-A1-91/01644
- US-A- 3 205 837
- US-A- 3 427 649

## Description

L'invention concerne un outillage pour la formation de galettes à partir d'une masse de nourriture ainsi que des machines de formation et de lavage utilisant cet outillage. La rationalisation des lignes de production, en particulier dans le cadre de la réalisation de galettes, comme des steaks hachés par exemple, à partir d'une masse de nourriture, telle une masse de viande par exemple, conduit à réaliser différentes formes de galettes sur une même ligne de production. Pour cela, les machines de production de galettes permettent de changer les moules de formation entre deux campagnes de production différentes, les moules inutilisés étant alors nettoyés et stockés en vue d'une réutilisation future. Des tels moules sont, par exemple, décrits dans les documents US3205837, EP2468104 ou WO2016/146519 Or de tels moules comportant plusieurs empreintes sont actuellement volumineux et lourds, donc difficilement manipulables par les opérateurs et aussi difficilement nettoyables. De plus, leur changement sur une ligne de production nécessite un temps d'arrêt de la ligne relativement important. Il a été alors développé des moules dont les empreintes sont désolidarisables du reste du corps de moule, plus facile à manipuler. D'autre part, de telles empreintes sont réalisées en matériau poreux, comme de l'acier inoxydable poreux, permettant l'utilisation de l'air sous pression sur une face externe de l'empreinte, opposée à la cavité de moulage de l'empreinte, qui traverse alors l'épaisseur de matériau poreux pour venir démouler la galette ainsi formée. Toutefois, le nettoyage de ces empreintes est problématique.

Dans un aspect de la présente invention, il est proposé une machine à laver telle que la machine spécifiée dans la revendication 1.

Un but de l'invention est de fournir un outillage pour la formation de galettes reste simple, facile et rapide à changer, tout en permettant un démoulage de la galette formée et un nettoyage de l'empreinte optimaux.

A cette fin, il est prévu selon l'invention, un outillage pour la formation de galettes à partir d'une masse de nourriture comportant :
- un porte-empreinte ;
- une empreinte agencée de sorte à être reçue dans le porte-empreinte, l'empreinte étant réalisée en un matériau poreux à l'encontre d'un fluide et comportant une face interne délimitant un moule de formation d'un galette et une face externe séparée de la face interne par une épaisseur de matériau poreux ; et,
- un moyen de serrage de l'empreinte dans le porte-empreinte,
l'outillage comportant en outre un joint d'étanchéité interposé entre l'empreinte et l'un parmi le porte-empreinte et le moyen de serrage, le joint d'étanchéité étant agencé de sorte à contraindre le passage à travers l'épaisseur de matériau poreux d'un fluide sous-pression, apporté sur la face externe, de cette dernière vers la face interne. Ainsi, une telle structure de l'outillage avec une empreinte en matériau poreux permet de conserver les avantages de manipulation, alors que l'utilisation d'un joint d'étanchéité entre l'empreinte et l'un parmi le porte-empreinte et le moyen de serrage permet d'assurer que le fluide passe à travers l'épaisseur de matériau poreux de l'empreinte avec des pressions suffisamment élevées pour optimiser le démoulage et le nettoyage.

Avantageusement, mais facultativement, l'outillage selon l'invention présente au moins l'une des caractéristiques techniques additionnelles suivantes :
- l'outillage comporte un deuxième joint d'étanchéité interposé entre l'empreinte et l'autre parmi le porte-empreinte et le moyen de serrage ;
- l'outillage comporte une chambre d'admission du fluide délimitée en partie par la face externe de l'empreinte ;
- la chambre d'admission du fluide est délimitée par une cavité réalisée dans le porte-empreinte ;
- le porte-empreinte comporte un conduit de mesure d'une pression régnant dans la chambre d'admission du fluide ;
- le porte-empreinte comporte un moyen d'admission du fluide ;
- le moyen de serrage étant un écrou de serrage, la chambre d'admission du fluide est délimitée par un creux réalisé dans l'écrou de serrage ;
- l'écrou de serrage comporte un conduit d'admission du fluide dans la chambre d'admission du fluide ;
- l'outillage comporte en outre une cale d'espacement positionnée entre l'empreinte et l'écrou de serrage, la cale d'espacement délimitant en partie la chambre d'admission du fluide ;
- la cale d'espacement comporte une grille de répartition du fluide sur la face externe de l'empreinte ; et,
- l'outillage comprend en outre un joint supplémentaire d'étanchéité interposé entre la cale d'espacement et l'empreinte et/ou un joint additionnel d'étanchéité interposé entre la cale d'espacement et l'écrou de serrage.

Il est aussi prévu, selon l'invention, une machine de formation de galettes à partir d'une masse de nourriture comportant un support de moules, le support de moule comportant au moins un outillage présentant au moins l'une des caractéristiques techniques précédentes.

Avantageusement, mais facultativement, la machine de formation de galettes selon l'invention présente au moins la caractéristique technique additionnelle suivante :
- le support de moule est l'un parmi un tambour, un plateau tournant et un tiroir.

Il est aussi prévu, selon l'invention, une machine de lavage d'empreintes comportant un circuit de fluide de lavage et au moins un outillage présentant au moins l'une des caractéristiques techniques précédentes en connexion fluidique avec le circuit de fluide de lavage.

Avantageusement, mais facultativement, la machine de lavage selon l'invention présente au moins l'une des caractéristiques techniques additionnelles suivantes :
- le fluide lavage comporte une base ou un acide ; et ,
- la machine de lavage comporte une buse de lavage de la face interne de l'empreinte.

D'autres caractéristiques et avantages de l'invention apparaîtront lors de la description ci-après de modes de réalisation de celle-ci et de variantes. Aux dessins annexés :
- La figure 1 est une vue tridimensionnelle d'un moule d'une machine de formation de galettes selon l'invention comportant des outillages selon l'invention, dont l'un est éclaté ;
- La figure 2 est une vue partielle en coupe d'un des outillages de la figure 1 ;
- La figure 3 est une vue tridimensionnelle d'une machine de lavage selon l'invention ;
- La figure 4 est une vue tridimensionnelle avant d'un premier mode de réalisation d'un plateau de lavage de la machine de lavage de la figure 3 ;
- La figure 5 est une vue en coupe du plateau de lavage de la figure 4 ;
- La figure 6 est une vue du détail VI de la figure 5 ;
- La figure 7 est une vue tridimensionnelle arrière du plateau de lavage de la figure 4 ;
- La figure 8 est une vue tridimensionnelle arrière d'un deuxième mode de réalisation d'un plateau de lavage de la machine de lavage de la figure 3 ;
- La figure 9 est une vue en coupe du plateau de lavage de la figure 8 ;
- La figure 10 est une vue tridimensionnelle d'une machine de test selon l'invention ;
- La figure 11 est une vue en coupe de la machine de test de la figure 10 ;
- La figure 12 est une vue tridimensionnelle d'un système de buses de lavage de la machine de la figure 3 ;
- Les figures 13 et 14 sont des vues partielles tridimensionnelles d'un deuxième mode de réalisation d'un moule d'une machine de formation de galettes selon l'invention comportant des outillages selon l'invention ; et,
- La figure 15 est une vue partielle tridimensionnelle de la machine de lavage selon l'invention adaptée au moule des figures 13 et 14.

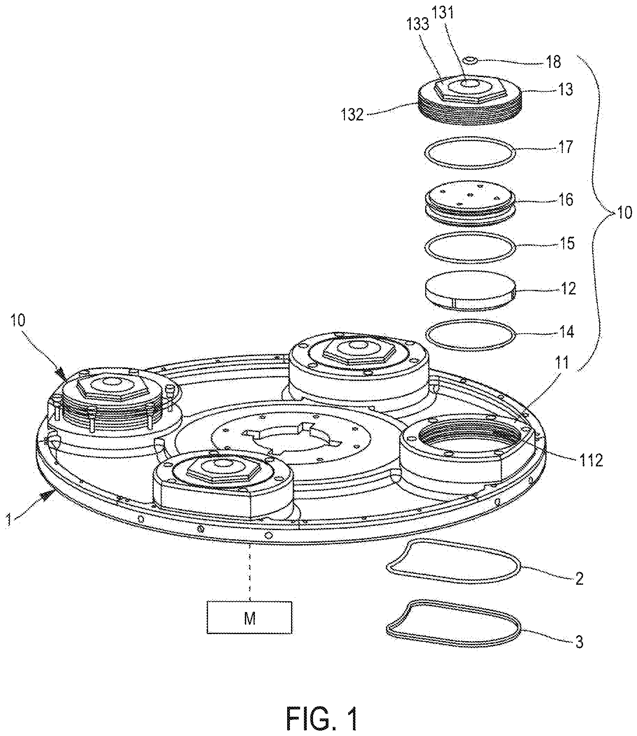

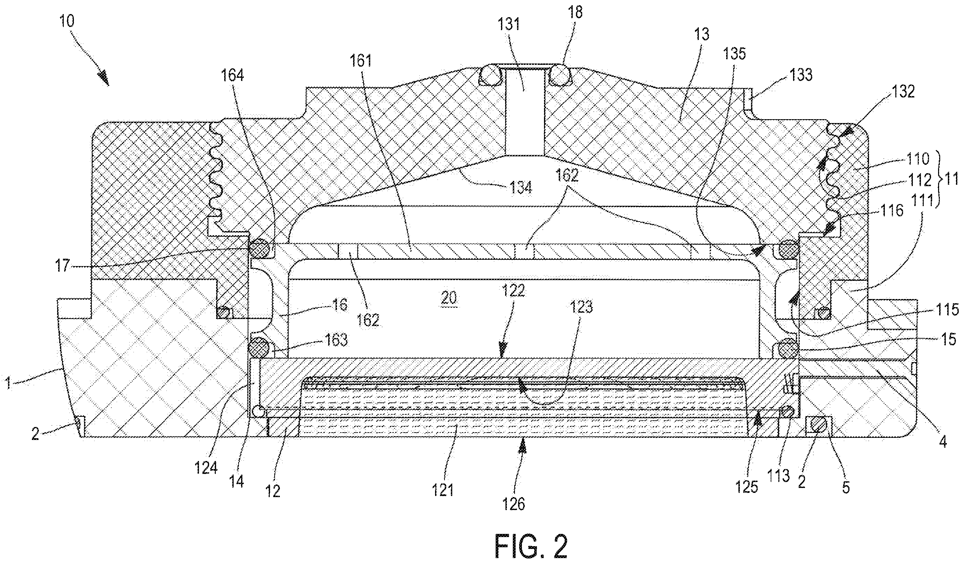

En référence aux figures 1 et 2, nous allons décrire un premier mode de réalisation d'un outillage 10 selon l'invention et d'une application de ce dernier sur une machine M de formation de galettes. Le moule, ici se présente sous la forme d'un plateau circulaire 1, tournant, sur lequel sont positionnés une série d'outillages 10 selon l'invention, de préférence uniformément répartis sur une circonférence du plateau circulaire 1. Dans le mode de réalisation illustré en figure 1, le plateau circulaire 10 comporte quatre outillages 10 selon l'invention. Ce type de moule s'utilise avec une alimentation en masse de nourriture par le dessous, un système d'étanchéité, composé d'un joint 2 et d'un jonc 3, tous deux reçus dans une rainure 5 débouchante au niveau d'une face inférieure du plateau circulaire 1 entourant l'outillage 10 selon l'invention, étant prévu pour assurer l'alimentation.

L'outillage 10 selon l'invention est donc destiné à la formation de galettes à partir d'une masse de nourriture. Il comporte, ici :
- Un porte-empreinte 11 fixé sur le plateau circulaire 10 ;
- Une empreinte 12 reçu dans le porte-empreinte 11;
- Un moyen de serrage, sous la forme d'un écrou de serrage, 13 de l'empreinte 12 dans le porte-empreinte 11; et,
- Un premier joint d'étanchéité 14, ici positionné entre l'empreinte 12 et le porte-empreinte 11.

En variante de réalisation, le premier joint d'étanchéité 14 est interposé entre l'empreinte 12 et l'écrou de serrage 13

Au surplus, de manière optionnelle, l'outillage 10 selon l'invention comporte en outre, ici :
- Un deuxième joint d'étanchéité 15 ;
- Une cale d'espacement 16 ; et,
- Un troisième joint d'étanchéité 17,
le deuxième joint d'étanchéité 15 étant interposé entre l'empreinte 12 et la cale d'espacement 16, et le troisième joint d'étanchéité 17 étant interposé entre la cale d'espacement 16 et l'écrou de serrage 13.

Dans une variante de réalisation, le deuxième joint d'étanchéité 15 est positionné entre l'empreinte 12 et l'écrou de serrage 13, l'outillage ne comportant pas de cale d'espacement 16.

Plus en détails, l'empreinte 12 est réalisée en un matériau poreux de grade alimentaire, comme un acier inoxydable, en particulier du 316L. Elle comporte une face interne 123 en creux formant un moule de formation d'une galette 121, et une face externe 122 séparée de la face interne 123, en particulier d'un fond du moule de formation d'une galette 122, fond faisant partie de la face interne 123, par une épaisseur de matériau poreux. La face externe 122 est ici plane. Sur une face latérale formant une périphérie de l'empreinte 12, cette dernière comporte un rebord d'appui 125 s'étendant tout le long de la dite périphérie de l'empreinte 12, ainsi qu'une série d'encoches 124 destinée à la manipulation de l'empreinte 12 à l'aide d'un outil adapté, non représenté. Ici l'empreinte 12 est de forme cylindrique de révolution globalement. En variantes d'autres formes sont possibles comme une forme carrée, rectangulaire ou polygonale ou encore une forme d'ellipse.

Dans le mode de réalisation illustré aux figures 1 et 2 de l'outillage 10 selon l'invention, le porte-empreinte 11 est en deux parties 110 et 111. La partie 111 est intégrée au plateau circulaire 1 et est venue de matière avec celui-ci. La partie 110 est rapportée sur la partie 111 et fixée à celle-ci. En variante de réalisation le porte-empreinte 11 est monobloc, en une seule pièce, rapporté sur le plateau circulaire 1 et fixé à celui-ci.

En outre, le porte-empreinte 11 comporte un orifice 115 de réception de l'empreinte 12, l'orifice 115 de réception ayant une forme complémentaire de la forme de l'empreinte 12. Ainsi, l'empreinte 12 est reçue au moins à coulissement dans l'orifice 115 du porte-empreinte 11. De sorte à retenir l'empreinte 12 lors d'une mise en place de celle-ci, le porte-empreinte 11 comporte un rebord de retenue 113 aménagé dans l'orifice 115. Lors de la mise en place de l'empreinte 12 dans le porte-empreinte 11, l'empreinte 12 est insérée à coulissement dans l'orifice 115 de réception jusqu'à ce que le rebord d'appui 125 de l'empreinte 12 vienne au contact du rebord de retenue 113 du porte-empreinte 11. En variante, le premier joint d'étanchéité 14 est positionné en sandwich entre le rebord d'appui 125 et le rebord de retenue 113.

Les rebords de retenue 113 et d'appui 125, avec la présence ou non du premier joint 14, sont agencés de sorte que, une fois l'empreinte 12 en place dans le porte-empreinte 11, une ouverture 126 du moule de formation d'une galette 121 soit sensiblement dans un plan de la face inférieure du plateau circulaire 1.

D'autre part, le porte-empreinte 11 comporte une partie filetée 112, ici située au-dessus de l'orifice 115 et relié à celui-ci par un rebord interne 116. Ainsi, la partie filetée 112 prolonge vers le haut l'orifice 115 de réception de l'empreinte 12. La partie filetée 112 est destinée à recevoir l'écrou de serrage 13 qui comprend, à cette fin, un filetage 132 complémentaire. L'écrou de serrage 13 comporte en outre :
- Une empreinte de mise en oeuvre 133, ici de forme hexagonale, destinée à coopérer avec un outil de serrage adapté complémentaire de l'empreinte de mise en oeuvre 133 pour le serrage et le desserrage de l'écrou de serrage 13 dans le porte-empreinte 11.
- Un creux 134 qui, lors d'un montage de l'outillage 10 selon l'invention, vient en regard de la face externe 122 de l'empreinte 12, de sorte à définir une chambre d'admission 20 au sein de l'outillage 10 selon l'invention.
- Une face d'appui 135 délimitant une ouverture du creux 134 agencée de sorte à venir s'insérer dans l'orifice 115.
- Un conduit d'admission 131 débouchant dans la chambre d'admission 20 au niveau du creux 134. Le conduit d'admission 131 est surmonté d'un joint d'étanchéité 18 entourant des moyens de connexion fluidique d'une conduite d'alimentation en fluide. Le conduit d'amission 131 permet de remplir avec un fluide la chambre d'admission.

Dans un premier agencement de l'outillage 10 selon l'invention, l'empreinte 12 est positionnée dans le porte-empreinte 11, les rebords d'appui 125 et de retenue 113 étant en contact. Puis, le premier joint d'étanchéité 14 est mise en place sur la face externe 122 de l'empreinte 12 (de manière similaire au deuxième joint d'étanchéité 15 illustré à la figure 2). Puis, l'écrou de serrage 13 est mis en place et serré, le premier joint d'étanchéité 14 se retrouvant alors pris en sandwich et comprimé entre la face d'appui 135 de l'écrou de serrage 13 et la face externe 122 de l'empreinte 12. Le premier joint d'étanchéité 14 assure alors l'étanchéité de la chambre d'admission 20 ainsi formée et délimitée par la face externe 122 de l'empreinte 12 et le creux 134 de l'écrou de serrage 13. En variante de réalisation de cet agencement, le premier joint d'étanchéité 14 est positionné en sandwich entre le rebord d'appui 125 et le rebord de retenue 113 et un deuxième joint d'étanchéité 15 est positionné en sandwich entre la face d'appui 135 de l'écrou de serrage 13 et la face externe 122 de l'empreinte 12.

Dans un deuxième agencement de l'outillage 10 selon l'invention, ce dernier comporte la cale d'espacement 16 qui est interposée entre l'écrou de serrage 13 et l'empreinte 12. La cale d'espacement est ainsi disposée à coulissement dans l'orifice 115 du porte-empreinte 11 et participe à la formation de la chambre d'admission 20. La cale d'espacement 16 comporte un premier dégagement 164 périphérique au niveau d'une extrémité venant en regard de la face externe 122 de l'empreinte 12. Le deuxième joint d'étanchéité 15 est reçu dans ce premier dégagement 164 de sorte à être pris en sandwich entre la cale d'espacement 16 et la face externe 122 de l'empreinte 12. De manière similaire, la cale d'espacement 16 comporte un deuxième dégagement 165. Le troisième joint d'étanchéité 17 est reçu dans ce deuxième dégagement 165 de sorte à être pris en sandwich entre la cale d'espacement 16 et la face d'appui 135 de l'écrou de serrage 13. L'étanchéité de la chambre d'admission 20 est alors assurée par les deuxième 15 et troisième 17 joints d'étanchéité.

La cale d'espacement 16 comporte en outre une grille de répartition 161 comportant une série de passages débouchants 162. La grille de répartition 161 s'étend en travers de la chambre d'admission 20, coupant cette dernière en deux parties : une partie entre la grille de répartition 161 et le creux 134 de l'écrou de serrage 13, et une partie entre la grille de répartition 161 et la face externe 122 de l'empreinte 12. Cette grille de répartition 16 a pour rôle de répartir le fluide injecté à haute vitesse dans la chambre d'admission 20 sur la face externe 122 de l'empreinte 12. Ainsi, la pression exercée par le fluide injectée à haute vitesse est mieux répartie sur la face externe 122 de l'empreinte 12, et par conséquent, à travers l'épaisseur de matériau poreux, au niveau du fond de la face interne 123 de l'empreinte 12 : cela permet un démoulage rapide et optimal de la galette formée dans le moule de formation d'une galette 121.

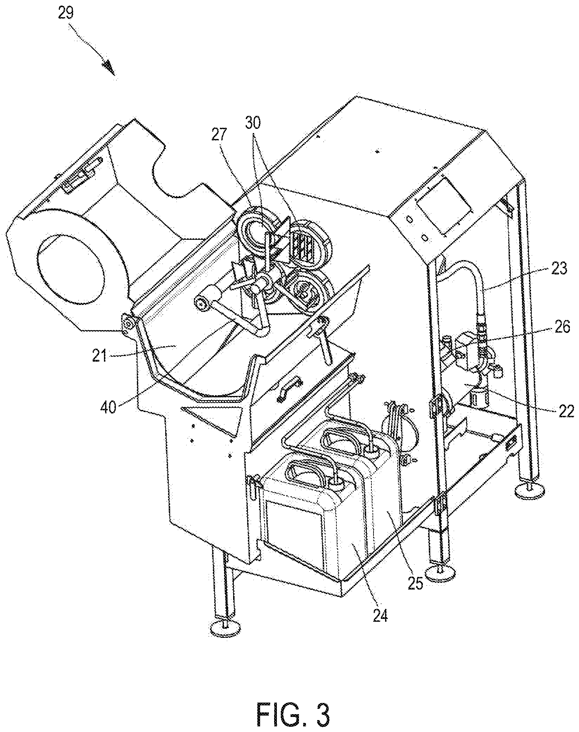

En référence à la figure 3, nous allons décrire une machine de lavage 29 pour le lavage d'empreintes 12 précédemment décrites. La machine de lavage 29 comporte un compartiment de lavage 21 accessible dans lequel sont aménagés un rotor à buses 40 escamotable et une série d'outillages 30 selon l'invention, ici au nombre de quatre, formant un plateau de lavage 27. Aussi bien le rotor à buses 40, que le plateau de lavage 27, sont connectés fluidiquement à une pompe 22 d'alimentation en fluide lavage contenu dans des réservoirs 24, 25 : le réservoir 24 comporte un fluide lavage comportant une base et le réservoir 25 comporte un fluide d lavage comportant un acide, ou inversement. Une conduite 23 relie fluidiquement la pompe 22 au plateau de lavage 27 et une conduite 26 relie fluidiquement la pompe 22 au rotor à buses 40.

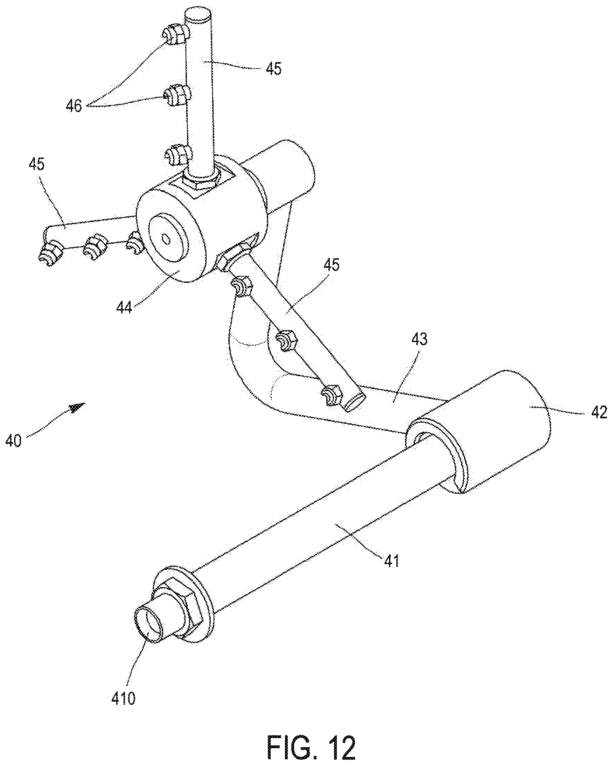

En référence à la figure 12, nous allons brièvement décrire le rotor à buses 40. Ce dernier comporte un tube d'alimentation fixe 41 comprenant à une extrémité des moyens de connexion fluidiques 410 avec la conduite 26 et à une autre extrémité une liaison pivot 42 avec un tube coudé 43. Le tube coudé 43 forme bras à l'extrémité duquel est montée un moyeu 44 d'où part une série de rampes 46, ici au nombre de trois. Le moyeu 44 est montée rotatif sur l'extrémité du tube coudé 43 et assure une connexion fluidique entre ce dernier et les rampes 46. Les rampes 46 sont équipés de buses de projection 46, ici au nombre de trois par rampe 45. Les buses 46 sont légèrement inclinée par rapport à une perpendiculaire à un plan comprenant la série de rampes 45 : ainsi, lors d'une projection de fluide de lavage par les buses 46, leur inclinaison induit un mouvement de rotation du moyeu 44 autour de son axe. La liaison pivot 42 connecte fluidiquement le tube d'alimentation fixe 41 au tube coudé 43 tout en permettant un mouvement d'escamotage de rotation de ce dernier pour écarter la série de rampes 46 d'une position de lavage où les buses 46 sont en regard du plateau de lavage 27 formé par les outillages 30 selon l'invention, vers une position d'intervention donnant accès aux outillages 30 selon l'invention. Le rotor à buses 40 va permettre de nettoyer la surface du moule de formation d'une galette 121 en assurant une évacuation des morceaux de nourriture restant ainsi que les déchets qui sont extraits du matériau poreux de l'empreinte 12.

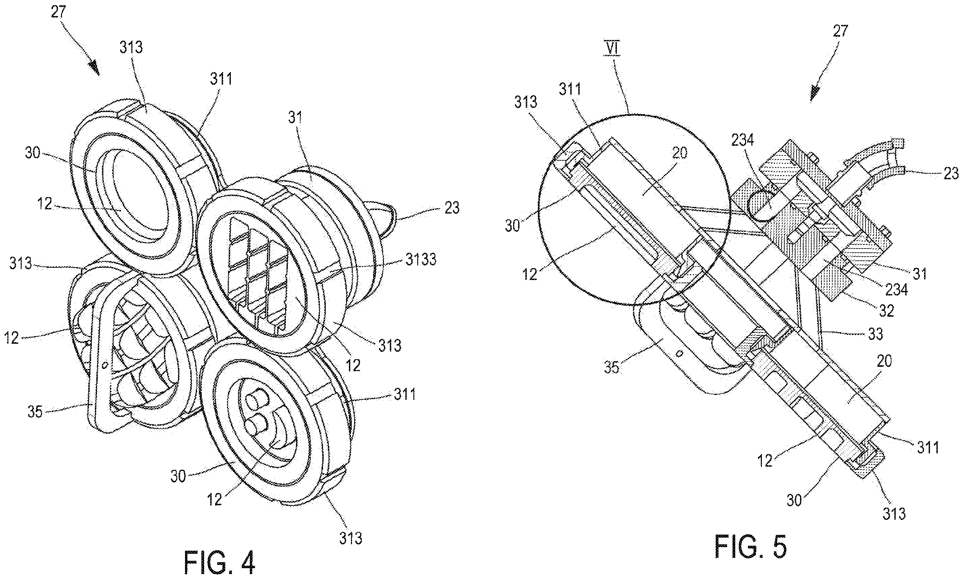

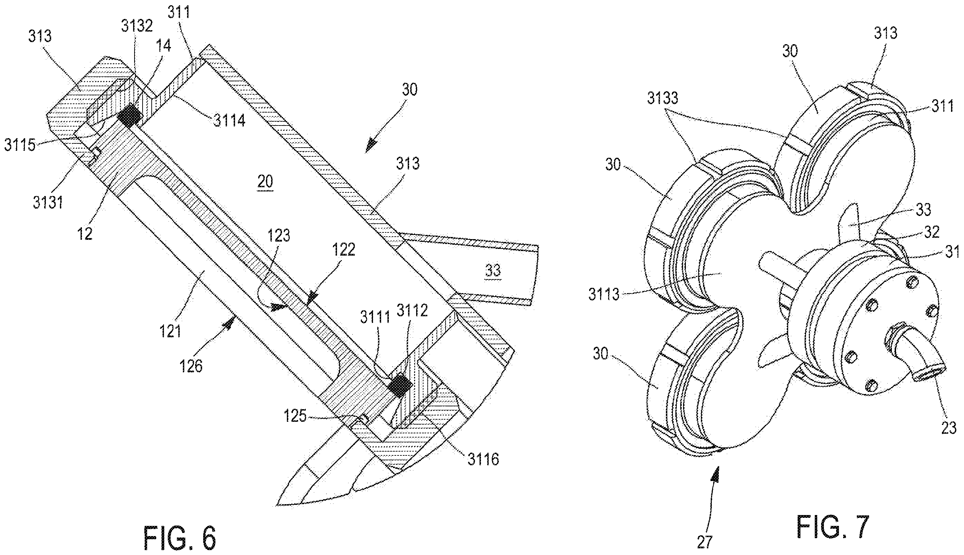

En référence aux figures 4 à 8, nous allons décrire un premier mode de réalisation du plateau de lavage 27. Le plateau de lavage 27 comporte ici quatre outillages 30 selon l'invention. Dans ce mode de réalisation de l'outillage 30 selon l'invention, ce dernier comporte l'empreinte 12, un porte-empreinte 311 agencé de sorte à recevoir l'empreinte 12, le premier joint d'étanchéité 14 et un moyen de serrage, ici sous la forme d'un écrou de serrage, 313.

Le porte-empreinte 311 comporte une cavité formant la chambre d'admission 20, la cavité étant délimité par un fond 3113 et une paroi latérale 3114 et comportant une ouverture de cavité 3111. Une gorge 3112 est aménagée sur une circonférence entourant l'ouverture de cavité 3111. La gorge 3112 reçoit le premier joint d'étanchéité 14. Dans le prolongement de l'ouverture de cavité 3111, le porte-empreinte 311 comporte un logement 3115 de réception de l'empreinte 12, le logement 3115 est ici de forme tronconique. De manière centrifuge, le logement 3111 est entourée par une paroi filetée 3116 externe latérale du porte-empreinte 311.

D'autre part, le porte-empreinte 313 comporte un moyen d'admission 33 du fluide, ici de lavage, débouchant dans la chambre d'admission 20 par le fond 3113.

L'écrou de serrage 313 présente ici une forme de bague dont une paroi interne latérale 3132 est filetée de manière complémentaire à la paroi filetée 3116 de manière à coopérer l'une avec l'autre. L'écrou de serrage 313 comporte en outre un rebord 3131 centripète. De plus, l'écrou de serrage 313 comporte des moyens de mise en oeuvre 3133, ici des rainures, destinés à coopérer avec un outil de serrage 35 adapté pour le serrage et le desserrage de l'écrou de serrage 313 dans le porte-empreinte 311.

Lors d'un assemblage de l'outillage 30 selon l'invention, l'empreinte 12 est mise en place dans le logement 3115, la face externe 122 de l'empreinte venant en appui sur le premier joint d'étanchéité 14 formant complètement la chambre d'admission 20. Puis, l'écrou de serrage 313 est vissé sur le porte-empreinte 311 en faisant coopérée les parois filetées 3116 et 3132 l'une avec l'autre jusqu'à ce que le rebord 3131 vienne en appui sur le rebord d'appui 125 de l'empreinte 12, et l'ouverture 126 du moule de formation d'une galette 121 soit sensiblement dans un plan d'une face externe du rebord 3131, le premier joint d'étanchéité étant comprimé pour assurer l'étanchéité entre la face externe 122 de l'empreinte 12 et le porte-empreinte 311.

Les différents outillages 30 selon l'invention du plateau de lavage 27 sont reliés entre eux par leur fond 3113 respectifs, qui sont, ici venus de matière les uns avec les autres. Les moyens d'admission 33 sont formés par des portion de tube montés sur une face d'un disque de connexion 32 comportant autant de conduits internes 234 perpendiculaires au plan du disque de connexion 32 que de moyens d'admission 33 du plateau de lavage 27. Un disque de distribution 31 est monté sur l'autre face du disque de connexion 32. Le disque de distribution 31 comporte, débouchant sur une face en regard de l'autre face du disque de connexion 32, autant de sorties qu'il y a de conduits internes dans le disque de distribution 32. Sur la face opposée du disque de distribution 31, ce dernier comporte une connexion fluidique avec la conduite 23, cette dernière étant relié fluidiquement simultanément à toutes les sorties du disque de distribution 31 par une chambre interne de répartition du fluide aménagée dans le disque de distribution 31. Ainsi toutes les sorties, et donc toutes les chambres d'admission 20 du plateau de lavage 27, sont alimentées de manière simultanée. D'autre part, l'assemblage des disques de distribution 31 et de connexion 32 s'effectue à travers un orifice d'une paroi du compartiment de lavage 21, les bords dudit orifice étant pris en sandwich entre les deux disques de distribution 31 et de connexion 32.

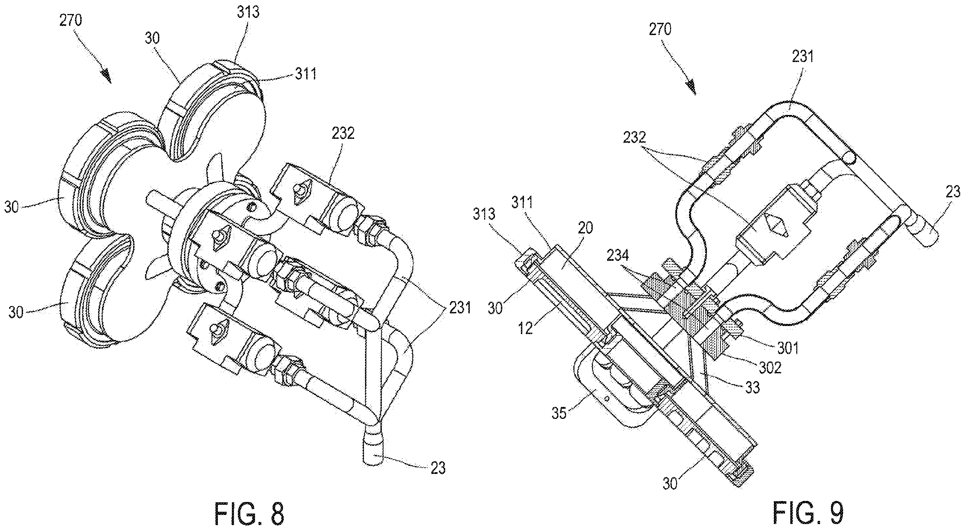

En référence maintenant aux figures 8 et 9, nous allons décrire un deuxième mode de réalisation du plateau de lavage 270. Nous ne décrirons que les différences du plateau de lavage 270 avec le plateau de lavage 27 précédent : celles-ci se situent au niveau des disques de connexion et de distribution. Le disque de connexion 302 est similaire au disque de connexion 32 dans sa forme et dans son rôle. Le disque de distribution 31 est remplacé par un ensemble de distribution comportant :
- Un deuxième disque de connexion 301 comportant autant de conduits internes perpendiculaires au plan du disque de connexion 301 que de conduits internes 234 du disque de connexion 302. l'assemblage des deux de connexion 301 et 302 s'effectue à travers un orifice d'une paroi du compartiment de lavage 21, les bords dudit orifice étant pris en sandwich entre les deux disques de connexion 301 et 302.
- Une série de dérivations 231 en nombre identique à celui de conduits internes 234 du disque de connexion 302 et connectées fluidiquement aux conduits interne du deuxième disque de connexion 301.les dérivation 231 se rejoignant fluidiquement sur la conduite 23.
- Une série de vannes pilotées 232, du type électrovanne, en nombre identique que celui de dérivations 231 : chacune des dérivations 231 étant ainsi équipée d'un vanne pilotée 232 dédiée.

Une telle structure permet d'alimenter de manière différentiée les différentes chambres d'admission 20 du plateau de lavage 270 de sorte à adapter le lavage à l'empreinte 12 effectivement positionnée dans l'outillage 30 selon l'invention considéré.

Quel que soit le mode de réalisation du plateau de lavage 27,270, le fonctionnement de la machine de lavage 29 est identique : le fluide de lavage est pompé par la pompe dans l'une des réservoirs 24 ou 25 et envoyé par cette dernière sous pression dans :
- les différentes chambres d'admission 20 des outillages 30 selon l'invention dont la structure précédemment décrite impose au fluide de lavage sous pression de passer à travers le matériau poreux de l'empreinte 12 depuis la face externe 122 vers la face interne 123 pour assurer le nettoyage optimal des pores.
- Les buses 46 du rotor à buse 40.

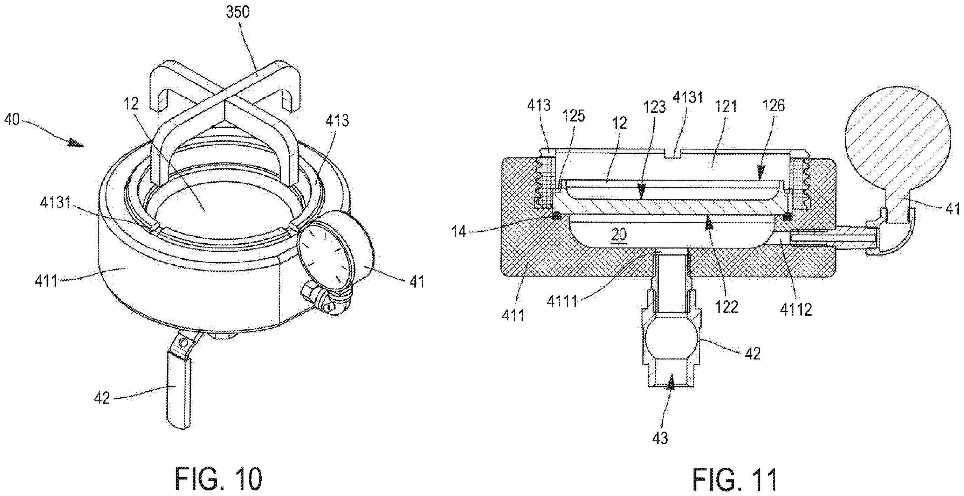

Nous allons maintenant décrire, en référence aux figures 10 et 11, un dispositif de test des empreintes 12. Ce dispositif de teste forme ici un outillage 40 selon l'invention. Ce dernier comporte :
- Un porte-empreinte 411 comportant une cavité formant la chambre d'admission 20. Le fond de la cavité comporte un moyen d'admission 411 de fluide sur le quel est agencée une vanne 42, de type quart de tour, elle-même connecté fluidiquement à une source de fluide sous pression 43. D'autre part, le porte-empreinte 411 comporte un conduit de mesure 4112 d'une pression régnant dans la chambre d'admission 20, conduit de mesure sur lequel est connecté un capteur de pression 41, comme un manomètre. Comme pour le porte-empreinte 311 précédent, le porte-empreinte 411 comporte une rainure circonférentielle de réception du premier joint d'étanchéité 14 entourant une ouverture de la cavité formant la chambre d'admission 20 et sur lequel vient en appui la face externe 122 de l'empreinte 12 à tester. Dans le prolongement de cette ouverture, le porte-empreinte 411 comporte une paroi latérale interne filetée.
- Un moyen de serrage, sous la forme d'un écrou de serrage, 413 en forme de bague comporte une paroi latérale externe filetée complémentaire agencée pour coopérer avec la paroi latérale interne filetée du porte-empreinte 411. L'écrou de serrage 413 comporte des moyens de mise en oeuvre 4131, ici des encoches, destinés à coopérer avec un outil de serrage 350 adapté pour le serrage et le desserrage de l'écrou de serrage 413 dans le porte-empreinte 411.

Lors d'un assemblage de l'outillage 40 selon l'invention, l'empreinte 12 est positionnée dans le porte-empreinte 411 de sorte à ce que la face externe 122 de l'empreinte vienne en appui sur le premier joint d'étanchéité 14 formant complètement la chambre d'admission 20. Puis, l'écrou de serrage 413 est vissé sur le porte-empreinte 411 en faisant coopérer les parois filetées l'une avec l'autre jusqu'à ce que l'écrou de serrage 413 vienne en appui sur le rebord d'appui 125 de l'empreinte 12.

Un tel dispositif de test des empreintes 12 permet de mesurer simplement la performance de la porosité des empreintes 12 à un fluide sous pression, comme de l'air. Ce dispositif permet aussi de vérifier le bon nettoyage des empreintes 12.

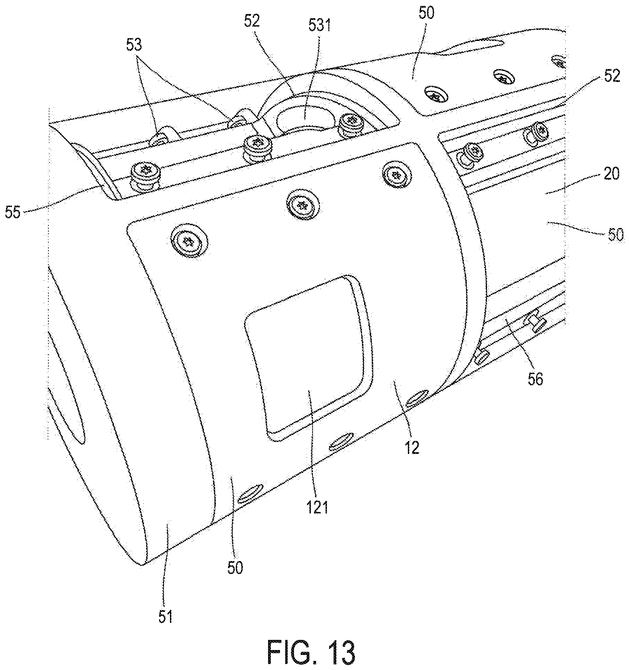

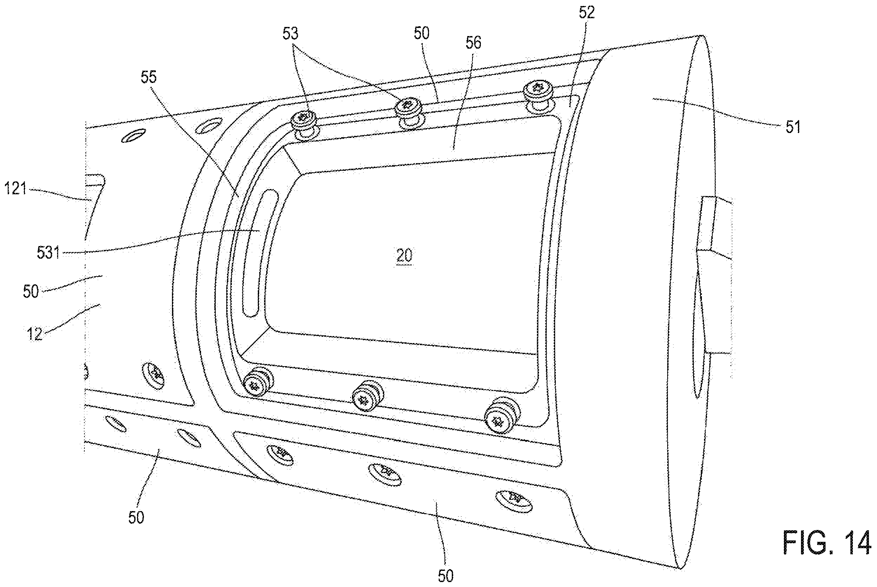

Maintenant, en référence aux figures 13 et 14, nous allons décrire un deuxième mode réalisation d'un outillage 50 selon l'invention. Le moule, ici, se présente sous la forme d'un tambour 51, tournant autour d'un axe longitudinale et sur la périphérie externe duquel sont positionnés une série d'outillages 50 selon l'invention, de préférence uniformément répartis sur une circonférence externe du tambour 51 et selon des génératrices du tambour 50. Dans le mode de réalisation illustré en figure 13, sont visibles quatre outillages 50 selon l'invention, dont deux outillages ont leur empreinte 12 retirée. Comme précédemment pour l'outillage 10 selon l'invention, l'outillage 50 selon l'invention est destiné à la formation de galettes à partir d'une masse de nourriture. L'outillage 50 comporte ici :
- Un porte-empreinte 52 aménagé dans une épaisseur du tambour 51 ;
- Une empreinte 12 reçue dans le porte-empreinte 52 ;
- Un moyen de serrage, sous la forme d'une série de vis de serrage, 53 de l'empreinte 12 dans le porte-empreinte 52 ; et,
- Un premier joint d'étanchéité 55, ici positionné entre l'empreinte 12 et le porte-empreinte 52.

D'autre part, une cale d'espacement 56 est aménagée dans le porte-empreinte 52 de sorte à délimiter une chambre d'admission 20 dans le porte-empreinte 52. La chambre d'admission 20 est délimitée aussi par une face externe 122 de l'empreinte 12, une fois cette dernière en place dans le prote-empreinte 52.

De plus, le porte-empreinte 52 comporte un conduit d'admission 531 débouchant dans la chambre d'admission 20, ici au niveau d'un des bords latéraux de ladite chambre d'admission 20. Le conduit d'admission 531 permet de remplir avec un fluide la chambre d'admission 20.

Dans un agencement de l'outillage 50 selon l'invention, après mise en place du joint d'étanchéité 55, l'empreinte 12 est positionnée dans le porte-empreinte 52 de sorte à venir en appui sur ledit joint d'étanchéité 55. Puis la série de vis de serrage 53 est mise en place et serrée, le joint d'étanchéité 55 se retrouvant alors pris en sandwich et comprimé entre la face externe de l'empreinte 12 et un rebord du porte-empreinte 52. En fin de serrage, ladite face externe de l'empreinte 12 est alors en appui contre la cale d'espacement 56 et la chambre d'admission 20 est formée et étanchéifiée.

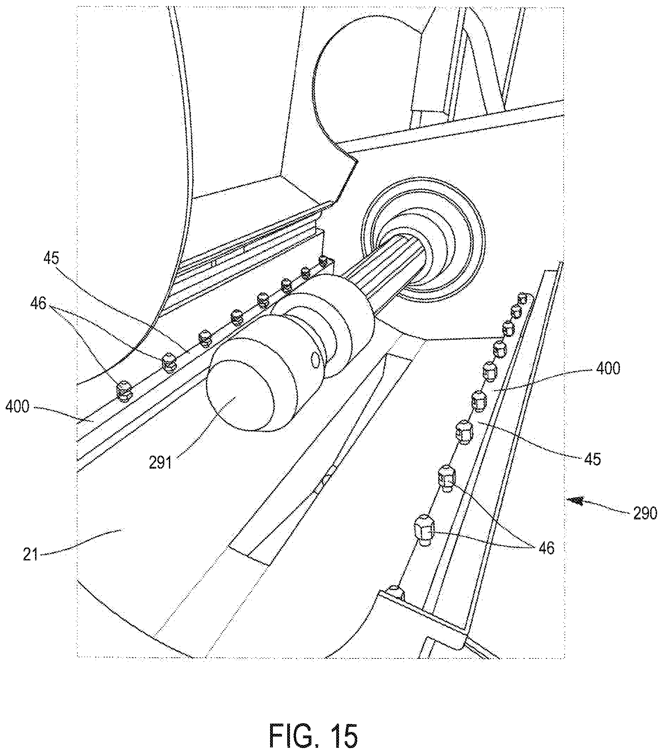

A la figure 15, est illustrée une variante de réalisation 290 de la machine de lavage 29 précédente. Cette variante 290 ne se différencie de la précédente 29 par l'aménagement du compartiment de lavage 21. La machine de lavage 290 comporte un axe rotatif 291 de montage du tambour 51. Dans une variante de réalisation, l'axe rotatif 291 de montage comporte des moyens d'alimentation en fluide de lavage des chambres d'admission 20 du tambour 51 via les conduits d'admission 531. D'autre part, le compartiment de lavage 21 comporte au moins une rampe de buses 400 ( ici au nombre de deux) comportant un tube d'alimentation 45 fixe s'étendant parallèlement à l'axe rotatif 291 de montage et comportant une série de buses de projection 46 qui, lors d'un lavage, sont en regard des empreintes 12 positionnées sur le tambour 51 alors lui-même montée sur l'axe rotatif 291 de montage. Comme pour le mode de réalisation précédent de la machine de lavage 29, cela va permettre de nettoyer la surface du moule de formation d'une galette 121 en assurant une évacuation des morceaux de nourriture restant ainsi que les déchets qui sont extraits du matériau poreux de l'empreinte 12.

Les outillages 10,30,40,50 selon l'invention qui viennent d'être décrit permettent de n'avoir à manipuler que des empreintes 12 de forme donnée, légères et de dimensions pour être aisément manipulables et transportables d'une poste à l'autre, tout en ayant des formes de moule de formation d'une galette 121 variées (comme cela est illustrée en figures 3 et 4), d'une part, et, d'autre part, tout en assurant un démoulage et un nettoyage optimaux.

L'invention est définie par les caractéristiques spécifiées dans les revendications annexées.

## Revendications

1. Machine de lavage d'empreintes (29;290) comportant un circuit de fluide de lavage et au moins un outillage (10;30;40;50) pour la formation de galettes à partir d'une masse de nourriture comportant :
• un porte-empreinte (11;311;411;52);
• une empreinte (12) agencée de sorte à être reçue dans le porte-empreinte, l'empreinte étant réalisée en un matériau poreux à l'encontre d'un fluide et comportant une face interne (123) délimitant un moule de formation d'un galette (121) et une face externe (122) séparée de la face interne par une épaisseur de matériau poreux ; et,
• un moyen de serrage (13;313;413;53) de l'empreinte dans le porte-empreinte, dans lequel, le moyen de serrage étant un écrou de serrage (13) ; et
• un joint d'étanchéité (14,15,17) interposé entre l'empreinte et l'un parmi le porte-empreinte et le moyen de serrage, le joint d'étanchéité étant agencé de sorte à contraindre le passage à travers l'épaisseur de matériau poreux d'un fluide sous-pression, apporté sur la face externe, de cette dernière vers la face interne ;et,
• une chambre d'admission (20) du fluide délimitée en partie par la face externe (122) de l'empreinte, et délimitée par une cavité réalisée dans le porte-empreinte et délimitée par un creux (134) réalisé dans l'écrou de serrage (13) ;
la machine de lavage d'empreintes (29;290) présentant la empreinte en connexion fluidique avec le circuit de fluide de lavage.

2. Machine de lavage d'empreintes selon la revendication 1, **caractérisé en ce que** le porte-empreinte comporte un conduit de mesure (4112) d'une pression régnant dans la chambre d'admission du fluide.

3. Machine de lavage d'empreintes selon la revendication 1, **caractérisé en ce que** le porte-empreinte comporte un moyen d'admission du fluide (33;4111).

4. Machine de lavage d'empreintes selon la revendication 1, **caractérisé en ce que** l'écrou de serrage comporte un conduit d'admission du fluide (131) dans la chambre d'admission du fluide.

5. Machine de lavage selon l'une des revendications 1 à 4, **caractérisée en ce que** le fluide lavage comporte une base ou un acide.

6. Machine de lavage selon l'une des revendications 1 à 5, **caractérisée en ce qu'**elle comporte une buse de lavage (46) de la face interne de l'empreinte.

7. En combinaison une machine de lavage d'empreintes et au moins un outillage selon l'une des revendications 1 à 6 avec une machine de formation de galettes (M) à partir d'une masse de nourriture comportant un support de moules (1;51), **caractérisée en ce que** le support de moule comporte au moins un outillage.

8. Combinaison selon la revendication 7, **caractérisée en ce que** le support de moule est l'un parmi un tambour (51), un plateau tournant (1) et un tiroir.

## Patentansprüche

1. Abdruckspülmaschine (29; 290) mit einem Spülfluidkreislauf und mindestens einem Werkzeug (10; 30; 40; 50) zum Formen von Fladen aus einer Lebensmittelmasse, umfassend:
• einen Abdruckträger (11; 311; 411; 52);
• einen Abdruck (12), der so angeordnet ist, dass er im Abdruckträger aufgenommen werden kann, wobei der Abdruck aus einem gegenüber einem Fluid porösen Material gefertigt ist und Folgendes aufweist: eine Innenseite (123), die eine Form zum Formen eines Fladens (121) begrenzt, und eine Außenseite (122), die von der Innenseite durch eine Dicke aus porösem Material getrennt ist; und,
• ein Mittel (13; 313; 413; 53) zum Einspannen des Abdrucks im Abdruckträger, wobei das Einspannmittel eine Spannmutter (13) ist; und
• eine Dichtung (14, 15, 17), die zwischen dem Abdruck und entweder dem Abdruckträger oder dem Einspannmittel angeordnet ist, wobei die Dichtung so angeordnet ist, dass sie den Durchgang eines auf die Außenseite aufgebrachten, unter Druck stehenden Fluids von der Außenseite durch die Dicke aus porösem Material hindurch zur Innenseite erzwingt; und
• eine Fluideinlasskammer (20), die teilweise durch die Außenseite (122) des Abdrucks begrenzt ist und durch einen Hohlraum begrenzt ist, der im Abdruckhalter vorgesehen und durch eine in der Spannmutter (13) vorgesehene Vertiefung (134) begrenzt ist;
wobei die Abdruckspülmaschine (29; 290) den Abdruck in Fluidverbindung mit dem Spülfluidkreislauf aufweist.

2. Abdruckspülmaschine nach Anspruch 1, **dadurch gekennzeichnet, dass** der Abdruckträger eine Leitung (4112) zum Messen eines in der Fluideinlasskammer herrschenden Drucks aufweist.

3. Abdruckspülmaschine nach Anspruch 1, **dadurch gekennzeichnet, dass** der Abdruckträger ein Fluideinlassmittel (33; 4111) aufweist.

4. Abdruckspülmaschine nach Anspruch 1, **dadurch gekennzeichnet, dass** die Spannmutter eine Fluideinlassleitung (131) in der Fluideinlasskammer aufweist.

5. Spülmaschine nach einem der Ansprüche 1 - 4, **dadurch gekennzeichnet, dass** das Spülfluid eine Base oder eine Säure enthält.

6. Spülmaschine nach einem der Ansprüche 1 - 5, **dadurch gekennzeichnet, dass** sie eine Düse (46) zum Spülen der Innenseite des Abdrucks aufweist.

7. Kombination einer Abdruckspülmaschine und mindestens eines Werkzeugs nach einem der Ansprüche 1 - 6 mit einer Maschine zum Formen von Fladen (M) aus einer Lebensmittelmasse, die einen Formträger (1; 51) aufweist, **dadurch gekennzeichnet, dass** der Formträger mindestens ein Werkzeug aufweist.

8. Kombination nach Anspruch 7, **dadurch gekennzeichnet, dass** der Formträger entweder eine Trommel (51) oder ein Drehteller (1) oder eine Schublade ist.

## Claims

1. Machine for washing impressions (29; 290), comprising a washing fluid circuit and at least one tool (10; 30; 40; 50) for forming patties from a food mass, comprising:
• an impression holder (11; 311; 411; 52);
• an impression (12) arranged so as to be received in the impression holder, the impression being made of a material that is porous to a fluid and having an inner face (123) delimiting a mould for forming a patty (121) and an outer face (122) separated from the inner face by a thickness of porous material; and
• a clamping means (13; 313; 413; 53) for clamping the impression in the impression holder, wherein the clamping means is a clamping nut (13); and
• a seal (14, 15, 17) interposed between the impression and one out of the impression holder and the clamping means, the seal being arranged so as to force a pressurized fluid, provided on the outer face, to pass through the thickness of porous material, from said outer face to the inner face; and
• a fluid intake chamber (20) partially delimited by the outer face (122) of the impression, and delimited by a cavity formed in the impression holder and delimited by a depression (134) formed in the clamping nut (13);
the machine for washing impressions (29; 290) having the impression in fluidic connection with the washing fluid circuit.

2. Machine for washing impressions according to Claim 1, **characterized in that** the impression holder has a measuring pipe (4112) for measuring a pressure prevailing in the fluid intake chamber.

3. Machine for washing impressions according to Claim 1, **characterized in that** the impression holder has a fluid intake means (33; 4111).

4. Machine for washing impressions according to Claim 1, **characterized in that** the clamping nut has a fluid intake pipe (131) for admitting fluid into the fluid intake chamber.

5. Washing machine according to one of Claims 1 - 4, **characterized in that** the washing fluid comprises a base or an acid.

6. Washing machine according to one of Claims 1 - 5, **characterized in that** it comprises a washing nozzle (46) for washing the inner face of the impression.

7. In combination, a machine for washing impressions and at least one tool according to one of Claims 1 - 6 with a patty forming machine (M) for forming patties from a food mass, comprising a mould support (1; 51), **characterized in that** the mould support has at least one tool.

8. Combination according to Claim 7, **characterized in that** the mould support is one out of a drum (51), a rotary plate (1) and a drawer.
